# EUROPEAN PATENT SPECIFICATION

(11) **EP 2 159 258 B1**
(45) Date of publication and mention of the grant of the patent: **27.07.2011**
(21) Application number: 08163012.1
(22) Date of filing: 26.08.2008
(51) Int. Cl.: C08K 9/00

(54) **Treated mineral filler products, process for the preparation thereof and uses of same**
Behandelte mineralische Füllstoffprodukte, Verfahren zu deren Herstellung und deren Verwendungen
Produits de remplissage à base de minerai traité, leur procédé de préparation et leurs utilisations

(43) Date of publication of application: 03.03.2010
(73) Proprietor: Omya Development AG, 4665 Oftringen (CH)
(72) Inventor: Gane, Patrick Arthur Charles, 4852, Rothrist (CH); Buri, Matthias, 4852, Rothrist (CH); Burkhalter, René, 3360, Herzogenbuchsee (CH)
(74) Representative: Hansen, Norbert

(56) References cited:
- EP-A- 0 388 194
- EP-A- 1 197 519
- EP-A- 1 544 250
- EP-A- 1 785 452
- WO-A-01/32787
- WO-A-02/06182
- WO-A-99/61521
- WO-A-2008/112393
- DE-A1- 3 927 777
- US-A1- 2006 046 058

## Description

The present invention relates to the domain of treated mineral filler products, to processes to prepare such treated mineral filler products, and to their uses, notably in plastic applications, and especially in polypropylene (PP)- or polyethylene (PE)-based breathable or extrusion coating film applications.

Mineral fillers are often used as particulate fillers in polymer products. The presence of volatiles associated with mineral fillers that evolve at temperatures reached during the application of such mineral fillers and/or in the processing of such mineral filler-comprising products may lead to the degradation of the quality of the final mineral-comprising polymer product. This is particularly a problem encountered in the preparation of mineral filler-comprising and more particularly calcium carbonate-comprising, PP- or PE-based breathable or extrusion coating films.

Moreover, volatiles may lead to a reduction in the tensile and tear strength of such a film, and may degrade its visible aspects, in particular of its visible uniformity.

Volatiles can generate excessive foaming of the mineral filled polymer melt during a step of compounding, causing unwanted product build-up at the vacuum extraction and hence, forcing a reduced output rate.

Such volatiles may, for example, be:
- inherently associated with the mineral filler ("inherent volatiles"), and is especially associated water, and/or
- introduced during the treatment of the mineral filler ("added volatiles"), for example to render the mineral filler more dispersible within a plastic medium, and/or
- generated by the reaction of inherent organic materials and/or added organic materials, with the mineral filler; such reactions may especially be induced or enhanced by the temperatures reached during the introduction and/or processing of the polymeric material comprising the treated mineral filler, such as during the extrusion or compounding process; and/or
- generated by the degradation of inherent organic materials and/or added organic materials, forming CO₂ water and possibly low molecular mass fractions of these organic materials; such a degradation may especially be induced or enhanced by the temperatures reached during the introduction and/or processing of the polymeric material comprising the treated mineral filler, such as during the extrusion or compounding process.

As such, the skilled man is in need of a mineral filler:
a) that is suitable for application, notably in the plastic industry;
b) featuring as high a "volatile onset temperature" as possible, as defined hereafter;
c) leading to a limited quantity of volatiles evolved over the range of temperatures typically reached during the implementation of said mineral filler (hereafter "total volatiles").

One obvious means to increase the volatile onset temperature and to limit the quantity of volatiles associated with a mineral filler is to avoid or limit the use of certain common filler treatment additives. However, often, as in the case when a mineral filler is applied in a plastic application, such additives are needed to ensure other functions.

In the case of breathable film applications, additives are introduced to provide the mineral filler with a hydrophobic coating and to improve the dispersability of the mineral filler in the film precursor material as well as possibly to improve the processability of this film precursor material and/or properties of the final application products. An elimination of such additives would unacceptably compromise the resulting film quality.

Thus, an additive for treating mineral fillers should provide the resulting mineral filler product with:
- a workable viscosity, notably of less than 10 000 mPa·s, at 180°C,
- an increased "volatile onset temperature",
- simultaneously limited "total volatiles",
- without compromising the mineral hydrophobicity, and hence film quality.

When the prior art makes reference to treated mineral fillers, and especially calcium carbonate, treatment comprising aliphatic carboxylic acids, and aliphatic carboxylic acid salts, is mentioned. However, it fails to provide any specific teaching with respect to providing the mineral fillers with the above mentioned features.

In this respect, *WO 00/20336 relates to an ultrafine natural calcium carbonate, which may optionally be treated with one or several fatty acids or one or several salts or mixtures thereof, and which is used as a rheology regulator for polymer compositions. Whereas fatty acid and fatty acid salt mixtures are generally mentioned in this document, nowhere are such mixtures exemplified nor are any preferential dosing amounts of the fatty acid relative to fatty acid salt referred to. Indeed, only stearic acid treatments of calcium carbonate are presented in the examples.

Likewise, US 4,407,986 recites a precipitated calcium carbonate that is surface-treated with a dispersant that may include higher aliphatic acids and their metal salts in order to limit the addition of lubricant additives when kneading this calcium carbonate with crystalline polypropylene and to avoid the formation of calcium carbonate aggregates that limit the impact strength of the polypropylene.

In EP 0 325 114**,** relating to non-sagging underseal compositions for motor vehicles based on polyvinyl chloride which has improved rheological and adhesion properties, Example 7 discloses a mixture of an ammonium salt of 12-hydroxystearic acid in combination with a fatty acid (in a weight ratio of 1:1) used to treat a mineral filler.

WO 03/082966 relates to a cross-linkable and/or cross-linked nanofiller composition which, in optional embodiments, may additionally include fillers that may or may not be coated with stearic acid, stearate, silane, siloxane and/or titanate. Such nanofiller compositions are used to increase barrier properties, strength and heat distortion temperatures, making them useful in medical, automotive, electrical, construction and food application.

US 2002/0102404 describes dispersible calcium carbonate particles coated on their surface with a combination of saturated and unsaturated aliphatic carboxylic acids and salts thereof along with an organic compound such as a phthalic ester, which are used in adhesive compositions to improve viscosity stability and adhesion properties. Whereas mixtures of fatty acids and fatty acid salts are generally mentioned, the examples include only treatments of calcium carbonate with mixtures of fatty acid salts.

Moreover, US 2002/0102404 requires the implementation of a mixture of saturated and unsaturated aliphatic carboxylic acids/salts. The presence of unsaturated aliphatic carboxylic acids/salts increases the risk of unwanted in situ side reactions with the double bond during processing of any unsaturated aliphatic carboxylic acid/salt-comprising material. Additionally, the presence of unsaturated aliphatic carboxylic acids/salts may result in discoloration of, or unwanted odour development, and notably rancid odours, in the material in which they are implemented.

Claim 11 of WO 92/02587 indicates that a saponified sodium salt solution of at least one high molecular weight unsaturated fatty acid or combination of at least one high molecular weight unsaturated fatty acid and at least one high molecular weight unsaturated fatty acid, may be added to a pre-heated slurry of precipitated calcium carbonate, to ultimately produce a desired level of fatty acid coating on the calcium carbonate before proceeding with further process steps.

The abstract of JP54162746 discloses a composition comprising given relative amounts of rigid vinyl chloride resin, fatty acid treated-colloidal calcium carbonate, and barium stearate used in order to improve the heat stability of the vinyl chloride composition.

US 4,520,073 describes mineral filler materials with improved hydrophobic coatings prepared by pressure coating of porous minerals using steam as a carrier for the coating material. Said coating material may be selected, among other options, from long chain aliphatic fatty acids and their salts.

WO 01/32787 describes a particulate alkaline earth metal carbonate material product which has on its particles a coating of hydrophobic material comprising a composition formed of (a) a first component which comprises the reaction product of the alkaline earth metal carbonate and at least one given aliphatic carboxylic acid and (b) a second component having a carbonate release temperature substantially higher than the first component comprises a compound of formula CH₃(CH₂)ₘCOOR, wherein, among other options, R is a Group II metal radical; further limitations are provided regarding the amounts of each component to be implemented. Notably, it is indicated that the second component forms at least 10 % by weight of the coating composition. Whereas a wide range of possible weight ratios are very generally indicated on page 13, line 20: "weight ratio of the first component to the second component may be from 10:80 to 90:10" (preferentially from 20:80 to 80:20), all of the further discussion and all of the given examples focus the skilled man solely on weight ratios between 50:50 and 90:10, which might be due to the fact that the only quite generally listed ratios where the fatty acid salt weight fraction exceeds that of the fatty acid (i.e. 80:20 and 90:10) provide treatment agents of unworkably high viscosities, namely above 10 000 mPa·s.

Additional prior art, namely WO 99/61521 and WO 2005/075353**,** which suggest a reduction of only the inherent water and picked up humidity of the starting mineral filler, entirely missed the point of reducing the other volatiles besides water which contribute to the total volatiles.

Thus, it can be taken from the prior art that carboxylic acids and/or carboxylic acid salts are commonly used treating agents for mineral fillers for different purposes.

However, no leading line or direction is available to the skilled man in the prior art, even in an indistinct manner, which would solve the following multifaceted technical problem with the help of these treatment agents:
- to treat a mineral filler such that it is sufficiently hydrophobic for applications in plastics requiring dispersability of said mineral filler in the polymer medium, and notably such that said filler is more hydrophobic than if treated with only an aliphatic carboxylic acid salt;
- to treat a mineral filler with a treatment agent featuring a workable viscosity, that is to say a viscosity of less than 10 000 mPa·s at 180°C;
- to increase the volatile onset temperature such that this onset temperature is significantly greater than that of a mineral filler treated with only an aliphatic carboxylic acid;
- to limit the total quantity of volatiles issued between 25 and 280°C;
- to identify a treatment agent that achieves the above regardless of whether or not the mineral filler(s) undergo a salt exchange on contact with carboxylic acids to created carboxylic acid salts at the filler surface.

Consequently, it is the object of the present invention to provide a process for the preparation of a treated mineral filler product having the above characteristics.

Finally, the use of such mineral filler products obtained by this process in plastic applications are also an object of the present invention.

For the purpose of the present application, the "volatile onset temperature" is defined as the temperature at which volatiles - including volatiles introduced as a result of common mineral filler preparation steps including grinding, with or without grinding aid agents, beneficiation, with or without flotation aid or other agents, and other pre-treatment agents not expressly listed above, detected according to the thermogravimetric analysis described hereafter - begin to evolve, as observed on a thermogravimetric (TGA) curve, plotting the mass of remaining sample (y-axis) as a function of temperature (x-axis), the preparation and interpretation of such a curve being defined hereafter.

For the purpose of the present application, the **"total volatiles"** associated with mineral fillers and evolved over a temperature range of 25 to 280°C is characterised according to % mass loss of the mineral filler sample over a temperature range as read on a thermogravimetric (TGA) curve.

TGA analytical methods provide information regarding losses of mass and volatile onset temperatures with great accuracy, and is common knowledge; it is, for example, described in "Principles of Instrumental analysis", fifth edition, Skoog, Holler, Nieman, 1998 (first edition 1992) in Chapter 31 pages 798 to 800, and in many other commonly known reference works. In the present invention, thermogravimetric analysis (TGA) is performed using a Mettler Toledo TGA 851 based on a sample of 500 +/- 50 mg and scanning temperatures from 25 to 280°C at a rate of 20°C/minute under an air flow of 70 ml/min.

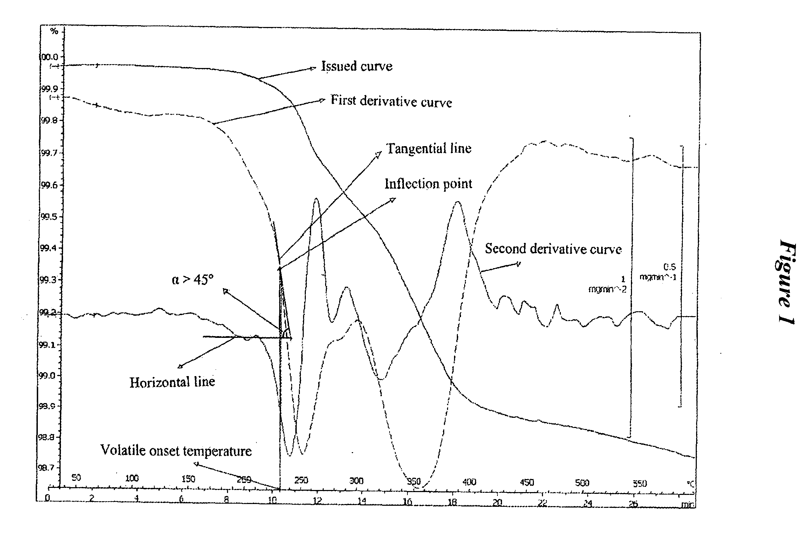

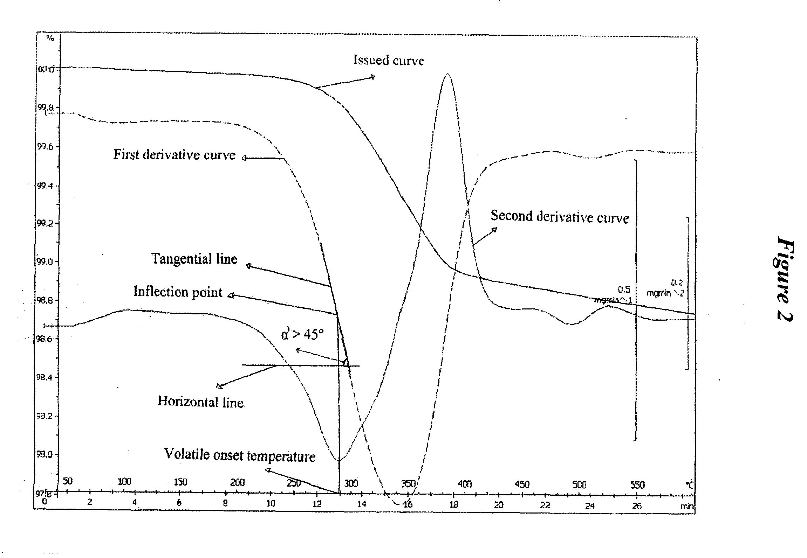

The skilled man will be able to determine the **"volatile onset temperature"** by analysis of the TGA curve as follows: the first derivative of the TGA curve is obtained and the inflection points thereon between 150 and 280°C are identified. Of the inflection points having a tangential slope value of greater than 45° relative to a horizontal line, the one having the lowest associated temperature above 200°C is identified. The temperature value associated with this lowest temperature inflection point of the first derivative curve is the **"volatile onset temperature".** An illustration of such an evaluation is given in Figures 1 and 2, described in the examples section hereafter.

The **"total volatiles"** evolved on the TGA curve is determined using Stare SW 9.01 software. Using this software, the curve is first normalised relative to the original sample weight in order to obtain mass losses in % values relative to the original sample. Thereafter, the temperature range of 25 to 280°C is selected and the step horizontal (in German: "Stufe horizontal") option selected in order to obtain the % mass loss over the selected temperature range.

Throughout the present document, a molten state is defined as the state in which a material is entirely liquid, in other words is entirely melted. Whereas the phenomenon of melting occurs at constant temperature on application of energy, a substance is qualified as being molten as of the moment following melting when the temperature begins to rise, as observed on a curve plotting temperature versus energy input obtained by thermogravimetric analysis (TGA). The details of such an analysis are provided hereafter.

Throughout the present document, the specific surface area (in m²/g) of the mineral filler is determined using the BET method, which is well known to the skilled man (ISO 9277:1995). The total surface area (in m²) of the mineral filler is then obtained by multiplication of the specific surface area and the mass (in g) of the mineral filler prior to treatment.

Throughout the present document, a dry mineral filler is understood to be a mineral filler having less than 0.2 % by weight of water relative to the mineral filler weight. The % water is determined according to the Coulometric Karl Fischer measurement method, wherein the mineral filler is heated to 220°C, and the water content released as vapour and isolated using a stream of nitrogen gas (at 100 ml/min) is determined in a Coulometric Karl Fischer unit.

Throughout the present document, the hydrophobicity of a mineral filler product is evaluated by determining the minimum alcohol to water ratio in an alcohol-water mixture needed for the settling of a majority of said mineral filler product, where said mineral filler product is deposited on the surface of said alcohol-water mixture by passage through a specific sieve.

Throughout the present document, the value dₓ represents the diameter relative to which X % by weight of the particles have a diameter less than dₓ, and is determined based on measurements made using Malvern Mastersizer^{™} X instrumentation (with software version 2.18 and using the OHD presentation and analysis model).

Throughout the present document, the term saturated means having an iodine number of less than 5, preferably less than 1g I₂/I 100 g sample. This iodine number determination is well-known to the skilled man, and namely implements a determination of the iodine addition to a 100 g sample by back-titration of the surplus iodine with sodium thiosulfate.

Throughout the present document, all viscosity values are measured in a PHYSICA MCR 300 equipped with a CP50 - 1 instrumentation at a shear rate of 5 s⁻¹ and scanning temperatures from 200 to 130 °C.

A first aspect of the present invention is a process for the preparation of a treated mineral filler product, characterised in that the process comprises the following steps:
(a) providing at least one dry mineral filler;
(b) providing at least one saturated Cg to C₂₄ aliphatic carboxylic acid(s);
(c) providing at least one di and/or trivalent cation salt of one or more saturated C₈ to C₂₄ aliphatic carboxylic acid;
(d) contacting said mineral filler(s) of step (a), in one or more steps under heating, with:
   a. the aliphatic carboxylic acid(s) of step (b);
   b. the aliphatic carboxylic acid salt(s) of step (c), whereupon
(e) a treatment layer comprising said aliphatic carboxylic acid(s) and said aliphatic carboxylic acid salt(s) is formed on the surface of said mineral filler(s) resulting in a treated mineral filler product; wherein
   - the weight ratio of all of said aliphatic carboxylic acid salt(s) provided in step (c) : all of said aliphatic carboxylic acid(s) provided in step (b) is from 51:49 to 75:25;
   - the total weight of all of said aliphatic carboxylic acid salt(s) and all of said aliphatic carboxylic acid(s) located on the surface of the mineral filler is at least 2.5 mg/m² of the mineral filler provided in step (a);
   - during step (d), the temperature is adjusted such that all of the aliphatic carboxylic acid(s) and aliphatic carboxylic acid salt(s) are molten.

In a preferred embodiment, the weight ratio of all of said aliphatic carboxylic acid salt(s) : all of said aliphatic carboxylic acid(s) is from 55:45 to 75:25, more preferably is from about 60:40 to 70:30, e.g. from 64:36 to 67:33.

The mineral filler(s) in (a) may, in a preferred embodiment, be a calcium carbonate-comprising mineral filler and/or plate-like mineral-comprising mineral filler and/or quartz-comprising mineral filler and/or clay-comprising mineral filler; more preferably it is a calcium carbonate-comprising mineral filler.

In the latter case, this calcium carbonate-comprising mineral fillers may be a precipitated calcium carbonate (PCC), namely one or more of the aragonitic, vateritic and calcitic mineralogical crystal forms, and/or a natural ground calcium carbonate (NGCC), namely one or more of marble, limestone, or chalk, and/or dolomite.

The calcium carbonate-comprising mineral fillers are preferably marble and/or dolomite.

Alternatively or additionally, these fillers may include plate-like mineral fillers such as talc.

As regards the di and/or trivalent cation salt(s) of one or more C₈ to C₂₄ aliphatic carboxylic acid(s), these are preferably selected from among calcium, magnesium, strontium and aluminium salts, and mixtures thereof, and more preferably are selected from among calcium salts, magnesium salts and mixtures thereof.

Alternatively or additionally, these may be di and/or trivalent cation salts of one or more C₁₀ to C_{18,} and preferably are di and/or trivalent cation salt of one or more C₁₂ to C₁₈ aliphatic carboxylic acid(s).

In another embodiment, said di and/or trivalent cation salt(s) of one or more C₈ to C₂₄ aliphatic carboxylic acid(s) are salt(s) of di and/or trivalent cation salt of one or more aliphatic monocarboxylic acid(s).

In yet another embodiment, said di and/or trivalent cation salt(s) of one or more C₈ to C₂₄ aliphatic carboxylic acid are salt(s) of one or more linear aliphatic carboxylic acid(s). In another embodiment, they are C₈ to C₂₄ aliphatic carboxylic acid salt(s) of one or more hydroxylated (i.e. OH group-comprising) aliphatic carboxylic acid(s).

In a preferred embodiment, said C₈ to C₂₄ aliphatic carboxylic acid(s) are salt(s) of one or more fatty acid(s), especially stearic and/or palmitic and/or myristic and/or lauric acid(s), and most preferably are salts of stearic and/or palmitic acid(s).

Said di and/or trivalent cation salt(s) of a C₈ to C₂₄ aliphatic carboxylic acid may feature an equivalent isolated viscosity of more than 100 000 mPa·s, and preferably of more than 1 000 000 mPa·s, at 180 °C when measured in a PHYSICA MCR 300 equipped with a CP50 - 1 instrumentation at a shear rate of 5 s⁻¹ and scanning temperatures from 200 to 130 °C.

Said C₈ to C₂₄ aliphatic carboxylic acid of the di and/or trivalent cation salt(s) of a C₈ to C₂₄ aliphatic carboxylic acid and the C₈ to C₂₄ aliphatic carboxylic acid(s) may or may not be equivalent.

As regards said C₈ to C₂₄ aliphatic carboxylic acid(s), these may be C₁₀ to C₁₈, and preferably are C₁₂ to C₁₈ aliphatic carboxylic acid(s).

In a preferred embodiment, said C₈ to C₂₄ aliphatic carboxylic acid(s) are aliphatic monocarboxylic acids. Alternatively or additionally, they may be linear aliphatic carboxylic acids and/or hydroxylated (i.e. OH group-comprising) aliphatic carboxylic acids.

In another preferred embodiment, said C₈ to C₂₄ aliphatic carboxylic acid(s) are fatty acid(s), especially stearic and/or palmitic and/or myristic and/or lauric acids or mixtures thereof, and most preferably are stearic and/or palmitic acid.

In one embodiment of the invention, the total aliphatic carboxylic acid(s) and aliphatic carboxylic acid salt(s) accounts for greater than 2.7, more preferably at least 3, especially at least 3.2, e.g. 3.5 mg of total aliphatic carboxylic acid(s) and aliphatic carboxylic acid salt(s)/m² of mineral filler(s).

It is preferred that the equivalent isolated mixture of the aliphatic carboxylic acid salts(s) and the aliphatic carboxylic acid(s) features a viscosity of less than 10 000, preferably of less than 1 000, and more preferably of less than 500 mPa·s at 180 °C. Indeed, above a value of 10 000 mPa·s, a treatment agent is largely unworkable.

In another preferred embodiment, the aliphatic carboxylic acid is a 1:1 stearic acid:palmitic acid mixture, and the aliphatic carboxylic acid salt(s) is a magnesium or calcium stearate.

It is also possible that additional treatment agents that do not correspond to a C₈ to C₂₄ aliphatic carboxylic acid, nor to a di and/or trivalent cation salt of a C₈ to C₂₄ aliphatic carboxylic acid are implemented in the process of the present invention. In such a case, it is preferred that this additional treatment agent is a siloxane, and more preferably a polydimethylsiloxane (PDMS).

As regards the mineral filler provided to step (a), it may previously have been dry or wet ground, and preferably dry ground, optionally with a grinding agent. It is also common that such a mineral filler undergoes a beneficiation step (such as a flotation, bleaching or magnetic separation step) to remove impurities.

In order to optimise the particle size distribution characteristics, it is also standard to subject the mineral filler(s) to a classification step. Indeed, it may be preferred to implement mineral filler(s) in step (a) featuring a d₅₀ of 0.5 to 10 microns, and more preferably featuring a d₅₀ of 1.5 to 1.8 microns. A mineral filler d₉₈ of less than 25 microns may also be advantageous.

The process of the present invention may be a continuous or batch process.

When implementing the aliphatic carboxylic acid(s) provided to step (b), it is preferably that these be in a molten state. The same is true of the aliphatic carboxylic acid salt(s) provided to step (c).

Step (d) of contacting the mineral filler with the aliphatic carboxylic acid(s) and aliphatic carboxylic acid salt(s) preferably takes place under mixing conditions. The skilled man will adapt these mixing conditions (such as the configuration of mixing pallets and mixing speed) according to his process equipment.

It is preferred that in step (d), all or part of said aliphatic carboxylic acid salt(s) of step (c) and all or part of said aliphatic carboxylic acid(s) of step (b), and preferably all of said aliphatic carboxylic acid salt(s) of step (c) and all of said aliphatic carboxylic acid(s) of step (b), are first contacted with one another and mixed to form a molten mixture prior to contacting any of said mineral filler(s).

In the case where an additional additive is implemented, such as siloxane, this would then generally be introduced in the process following step (d).

Another object of the invention is the use of a treated mineral filler products obtained by a process as described above in a process of mixing and/or extruding and/or compounding and/or blow moulding with plastic materials, and preferably with polyolefins or thermoplastics such as polyethylenes (PE), polypropylenes (PP) and/or polyurethanes (PU), particularly to obtain films, namely stretched / oriented films, and preferably breathable films, or extrusion coating films.

The following figures, examples and tests will additionally illustrate the invention without in any way limiting its scope.

### Description of the figures:

- Figure 1: presents the TGA curve obtained for the treated mineral filler product of comparative Example 1.
- Figure 2: presents the TGA curve obtained for the treated mineral filler product of Example 5 according to the invention.

### EXAMPLES

All measurement methods implemented in the examples are described hereabove.

In all cases, the hydrophobicity of the resulting material was compared to that of a material treated according to the same process but wherein the aliphatic carboxylic acid is entirely replaced by the corresponding calcium or magnesium salt. The indication "yes" implies that the material is more hydrophobic than the purely salt treated comparison.

Stearic acid and dry palmitic acid powder mixtures used in the tests hereafter feature a weight ratio of stearic acid:palmitic acid of 56:44 based on pure forms of the acids obtained from Fluka.

Calcium stearate used in the tests hereafter, commercialised under the trade name Ceasit I, was obtained from Baerlocher.

Magnesium stearate used in the tests hereafter was obtained from Siegfried Handel.

Magnesium laurate used in the tests hereafter was synthesized by reaction of lauric acid, purum grade obtained from Fluka, and sodium hydroxide, purum grade from Fluka, followed by precipitation with magnesium hydroxide, purum grade from Fluka.

### Example 1 - Comparative Example

500 g of a cyclone-classified, marble from Carrara, Italy, dry ground using a glycol-based dry grinding aid and featuring a d₅₀ of approximately 2.2 microns and a specific surface area of 3.6 was added to an MTI Mixer and the mixing was activated at 500 rpm. Thereafter a 1:1 mixture of dry stearic acid powder and dry palmitic acid powder at room temperature was introduced to the mixer in a quantity so as to obtain the mg of treatment agent per m² of marble indicated in Table 1, and the mixer contents were heated to 130°C. The contents of the mixer were mixed at 130°C under a stirring speed of 500 rpm for a period of 10 minutes.

The product so obtained was thereafter analysed; the results are presented in Table 1.

Figure 1 presents the TGA curve obtained for the treated mineral filler product of Example 1. On Figure 1, the broad continuous line represents the % remaining sample weight relative to the original sample weight as a function of both temperature and time as issued by the TGA instrumentation software. The dashed line represents the first derivative of this issued curve, and the narrow continuous line represents the second derivative of this issued curve. A tangential line is drawn at the inflection point of the second derivative curve having an angle (α, also figured) of at least 45° at the lowest associated temperature above 200°C. The temperature associated with this inflection point is the volatile onset temperature.

### Example 2 - Comparative Example

500 g of a cyclone-classified, marble from Carrara, Italy, dry ground using a glycol-based dry grinding aid and featuring a d₅₀ of approximately 2.2 microns and a specific surface area of 3.6 was added to an MTI Mixer and the mixing was activated at 500 rpm. Thereafter calcium stearate powder at room temperature was introduced to the mixer in a quantity so as to obtain the mg of treatment agent per m² of marble indicated in Table 1, and the mixer contents were heated to 180°C. The contents of the mixer were mixed at 180°C under a stirring speed of 500 rpm for a period of 10 minutes.

The product so obtained was thereafter analysed; the results are presented in Table 1.

### Example 3 - Comparative Example

500 g of a cyclone-classified, marble from Carrara, Italy, dry ground using a glycol-based dry grinding aid and featuring a d₅₀ of approximately 2.2 microns and a specific surface area of 3.6 was added to an MTI Mixer and the mixing was activated at 500 rpm. Separately, a 1:1 mixture of dry stearic acid powder and dry palmitic acid powder was mixed by hand with calcium stearate, also in powder form, in the relative amounts listed in Table 1 at a temperature of 180°C in a beaker. Once a visually homogeneous molten mixture of the acid and salt were obtained, this molten mixture was allowed to cool to form a powder. The so obtained powder was thereafter added to the marble in the MTI Mixer in a quantity so as to obtain the mg of treatment agent per m² of marble indicated in Table 1. The contents of the mixer heated to 130°C and were mixed at 180°C under a stirring speed of 500 rpm for a period of 10 minutes.

The product so obtained was thereafter analysed; the results are presented in Table 1.

### Example 4 - Comparative Example

Example 3 above was repeated but implementing the relative amounts of aliphatic carboxylic acid to aliphatic carboxylic acid salt listed in Table 1.

The product so obtained was thereafter analysed; the results are presented in Table 1.

### Example 5 - Example of the Invention

Example 3 above was repeated but implementing the relative amounts of aliphatic carboxylic acid to aliphatic carboxylic acid salt listed in Table 1.

The product so obtained was thereafter analysed; the results are presented in Table 1.

Figure 2 presents the TGA curve obtained for the treated mineral filler product of Example 5. On Figure 2, the broad continuous line represents the % remaining sample weight relative to the original sample weight as a function of both temperature and time as issued by the TGA instrumentation software. The dashed line represents the first derivative of this issued curve, and the narrow continuous line represents the second derivative of this issued curve. A tangential line is drawn at the inflection point of the second derivative curve having an angle (α', also figured) of at least 45° at the lowest associated temperature above 200°C. The temperature associated with this inflection point is the volatile onset temperature.

### Example 6 - Example of the Invention

Example 3 above was repeated but replacing the marble with a marble featuring a d₅₀ of approximately 2.2 microns and a specific surface area of 3.6, and implementing the relative amounts of aliphatic carboxylic acid to aliphatic carboxylic acid salt listed in Table 1 and so as to obtain the mg of treatment agent per m² of marble indicated in Table 1.

The product so obtained was thereafter analysed; the results are presented in Table 1.

### Example 7 - Example of the Invention

Example 3 above was repeated but replacing the marble with a marble featuring a d₅₀ of approximately 6.5 microns and a specific surface area of 1.8 m²/g, implementing the relative amounts of aliphatic carboxylic acid to aliphatic carboxylic acid salt listed in Table 1 so as to obtain the mg of treatment agent per m² of marble indicated in Table 1.

The product so obtained was thereafter analysed; the results are presented in Table 1.

### Example 8 - Example of the Invention

Example 3 above was repeated but replacing calcium stearate by magnesium laurate and implementing the relative amounts of aliphatic carboxylic acid to aliphatic carboxylic acid salt listed in Table 1.

The product so obtained was thereafter analysed; the results are presented in Table 1.

**Table 1**

| **Test** | **1** | **2** | **3** | **4** | **5** | **6** | **7** | **8** |
|---|---|---|---|---|---|---|---|---|
| | **Comparison** | **Comparison** | **Comparison** | **Comparison** | **Invention** | **Invention** | **Invention** | **Invention** |
| **Mineral** | CaCO₃ | CaCO₃ | CaCO₃ | CaCO₃ | CaCO₃ | CaCO₃ | CaCO₃ | CaCO₃ |
| **Carboxylic acid** | Stearic / palmitic acid (56:44) | | Stearic / palmitic acid (56:44) | Stearic/ palmitic acid (56:44) | Stearic / palmitic acid (56:44) | Stearic / palmitic acid (56:44) | Stearic / palmitic acid (56:44) | Stearic / palmitic acid (56:44) |
| **Carboxylic acid salt** | | Ca stearate | Ca stearate | Ca stearate | Ca stearate | Ca stearate | Ca stearate | Mg Laurate |
| **Total treatment agent [mg/m²** of **mineral]** | 3.1 | 2.9 | 2.9 | 3.5 | 3.1 | 3.8 | 3.2 | 3.2 |
| **Weight ratio carboxylic acid salt(s) : carboxylic acid(s)** | 0 : 100 | 100 : 0 | 33 : 67 | 50 : 50 | 67 : 33 | 75 : 25 | 75 : 25 | 70 : 30 |
| **Isolated carboxylic acid salt viscosity [mPa·s]** | | 1 600 000 | 1 600 000 | 1 600 000 | 1 600 000 | 1 600 000 | 1 600 000 | 1 600 000 |
| **Treatment agent viscosity** | -- | -- | < 100 mPa·s | < 100 mPa·s | < 100 mPa·s | 2600 mPa·s | 2600 mPa·s | 9000 mPa·s |
| **Total volatiles [% by mass] (± 0.01%)** | 0.36% | 0.08% | 0.31% | 0.34% | 0.15% | 0.21% | 0.08% | 0.04% |
| **Volatile onset temperature** | 240°C | 303°C | 240°C | 240°C | 290°C | 300°C | 300°C | 290°C |
| **More hydrophobic than when treated with equivalent carboxylic acid salt** | yes | Not applicable | yes | yes | yes | yes | yes | yes |

The results of Table 1 clearly demonstrate that only the inventive process simultaneously implements treatment agents having a workable viscosity and results in treated products featuring the desired low "volatile onset temperature", low "total volatiles" and required hydrophobicity.

## Claims

1. Process for the preparation of a treated mineral filler product, **characterised in that** said process comprises the following steps:
(a) providing at least one dry mineral filler;
(b) providing at least one saturated C₈ to C₂₄ aliphatic carboxylic acid(s);
(c) providing at least one di and/or trivalent cation salt of one or more saturated C₈ to C₂₄ aliphatic carboxylic acid;
(d) contacting said mineral filler(s) of step (a), in one or more steps under heating, with:
a. the "aliphatic carboxylic acid(s)" of step (b);
b. the "aliphatic carboxylic acid salt(s)" of step (c); whereupon
(e) a treatment layer comprising said aliphatic carboxylic acid(s) and said aliphatic carboxylic acid salt(s) is formed on the surface of said mineral filler(s) resulting in a treated mineral filler product;
**characterised in that**:
- the weight ratio of all of said aliphatic carboxylic acid salt(s) provided in step (c) : all of said aliphatic carboxylic acid(s) provided in step (b) is from 51:49 to 75:25;
- the total weight of all of said aliphatic carboxylic acid salt(s) and all of said aliphatic carboxylic acid(s) located on the surface of the mineral filler is at least 2.5 mg/m² of the mineral filler provided in step (a);
- during step (d), the temperature is adjusted such that all of the aliphatic carboxylic acid(s) and aliphatic carboxylic acid salt(s) are molten.

2. Process according to claim 1,
**characterised in that** said weight ratio of all of said aliphatic carboxylic acid salt(s) : all of said aliphatic carboxylic acid(s) is from 55:45 to 75:25, more preferably is from about 60:40 to 70:30, e.g. from 64:36 to 67:33.

3. Process according to claim 1 or 2,
**characterised in that** the mineral filler(s) in (a) are calcium carbonate-comprising mineral fillers and/or plate-like mineral-comprising mineral fillers and/or quartz-comprising mineral fillers and/or clay-comprising mineral fillers, and are preferably calcium carbonate-comprising mineral fillers.

4. Process according to claim 3,
**characterised in that** the calcium carbonate-comprising mineral fillers are precipitated calcium carbonate (PCC), namely one or more of the aragonitic, vateritic and calcitic mineralogical crystal forms, and/or natural ground calcium carbonate (NGCC), namely one or more of marble, limestone, or chalk, and/or dolomite.

5. Process according to claim 4,
**characterised in that** the calcium carbonate-comprising mineral fillers are marble and/or dolomite.

6. Process according to claim 3,
**characterised in that** the plate-like mineral filler is talc.

7. Process according to any of claims 1 to 6,
**characterised in that** the di and/or trivalent cation salt(s) of one or more C₈ to C₂₄ aliphatic carboxylic acid(s) are selected from among calcium, magnesium, strontium and aluminium salts, and mixtures thereof, and preferably are selected from among calcium salts, magnesium salts and mixtures thereof.

8. Process according to any of claims 1 to 7,
**characterised in that** the di and/or trivalent cation salt(s) of one or more C₈ to C₂₄ aliphatic carboxylic acid(s) are di and/or trivalent cation salt of one or more C₁₀ to C₁₈, and preferably are di and/or trivalent cation salt of one or more C₁₂ to C₁₈ aliphatic carboxylic acid(s).

9. Process according to any of claims 1 to 8,
**characterised in that** the di and/or trivalent cation salt(s) of one or more C₈ to C₂₄ aliphatic carboxylic acid(s) are salt(s) of di and/or trivalent cation salt of one or more aliphatic monocarboxylic acid(s).

10. Process according to any of claims 1 to 9,
**characterised in that** the di and/or trivalent cation salt(s) of one or more C₈ to C₂₄ aliphatic carboxylic acid(s) are salt(s) of one or more fatty acid(s), especially stearic and/or palmitic and/or myristic and/or lauric acid(s), and most preferably are salts of stearic and/or palmitic acid(s).

11. Process according to any of claims 1 to 10,
**characterised in that** the di and/or trivalent cation salt(s) of a C₈ to C₂₄ aliphatic carboxylic acid feature an equivalent isolated viscosity of more than 100 000 mPa·s, and preferably of more than 1 000 000 mPa·s, at 180 °C when measured in a PHYSICA MCR 300 equipped with a CP50-1 instrumentation at a shear rate of 5 s⁻¹ and scanning temperatures from 200 to 130 °C.

12. Process according to any of claims 1 to 11,
**characterised in that** the C₈ to C₂₄ aliphatic carboxylic acid(s) are C₁₀ to C₁₈, and preferably a C₁₂ to C₁₈ aliphatic carboxylic acid(s).

13. Process according to any of claims 1 to 12,
**characterised in that** the C₈ to C₂₄ aliphatic carboxylic acid(s) are fatty acid(s), especially stearic and/or palmitic and/or myristic and/or lauric acids or mixtures thereof, and most preferably are stearic and/or palmitic acid.

14. Process according to any of claims 1 to 13,
**characterised in that** the total aliphatic carboxylic acid(s) and aliphatic carboxylic acid salt(s) accounts for greater greater than 2.7, more preferably at least 3, especially at least 3.2, e.g. 3.5 mg of total aliphatic carboxylic acid(s) and aliphatic carboxylic acid salt(s)/m² of mineral filler(s).

15. Process according to any of claims 1 to 14,
**characterised in that** the equivalent isolated mixture of the aliphatic carboxylic acid salts(s) and the aliphatic carboxylic acid(s) features a viscosity of less than 10 000, preferably of less than 1 000, and more preferably of less than 500 mPa·s at 180 °C.

16. Process according to any of claims 1 to 15,
**characterised in that** the aliphatic carboxylic acid is a 1:1 stearic acid:palmitic acid mixture, and the aliphatic carboxylic acid salt(s) is a magnesium or calcium stearate.

17. Process according to any of claims 1 to 16,
**characterised in that** the aliphatic carboxylic acid(s) provided to step (b) are in a molten state.

18. Process according to any of claims 1 to 17,
**characterised in that** the aliphatic carboxylic acid salt(s) provided to step (c) are in a molten state.

19. Process according to any of claims 1 to 18,
**characterised in that** in step (d), all or part of said aliphatic carboxylic acid salt(s) of step (c) and all or part of said aliphatic carboxylic acid(s) of step (b), and preferably all of said aliphatic carboxylic acid salt(s) of step (c) and all of said aliphatic carboxylic acid(s) of step (b), are first contacted with one another and mixed to form a molten mixture prior to contacting any of said mineral filler(s).

20. Use of a product obtained by a process according to any of claims 1 to 19 in a process of mixing and/or extruding and/or compounding and/or blow moulding with plastic materials.

21. The use according to claim 20,
**characterised in that** the plastic materials comprise polyolefins or thermoplastics such as polyethylenes (PE), polypropylenes (PP) and/or polyurethanes (PU).

22. Films comprising the products obtained by a process according to any of claims 1 to 19.

23. The films according to claim 22,
**characterised in that** they are selected from the group comprising stretched and/or oriented films, and preferably breathable films, or extrusion coating films.

## Patentansprüche

1. Verfahren für die Herstellung eines behandelten Mineralfüllstoffprodukts, **dadurch gekennzeichnet, dass** das Verfahren die folgenden Schritte umfasst:
(a) Bereitstellen wenigstens eines trockenen Mineralfüllstoffes;
(b) Bereitstellen wenigstens einer gesättigten, aliphatischen C₈- bis C₂₄-Carbonsäure;
(c) Bereitstellen wenigstens eines di- und/oder trivalenten Kationensalzes einer gesättigten, aliphatischen C₈- bis C₂₄-Carbonsäure oder mehrerer gesättigter, aliphatischer C₈- bis C₂₄-Carbonsäuren;
(d) Inkontaktbringen des Mineralfüllstoffes bzw. der Mineralfüllstoffe aus Schritt (a) in einem Schritt oder in mehreren Schritten unter Erwärmen mit:
a. der "aliphatischen Carbonsäure bzw. den aliphatischen Carbonsäuren" aus Schritt (b);
b. dem "aliphatischen Carbonsäuresalz bzw. den aliphatischen Carbonsäuresalzen" aus Schritt (c); wonach
(e) eine Behandlungsschicht, welche die aliphatische Carbonsäure bzw. die aliphatischen Carbonsäuren und das aliphatische Carbonsäuresalz bzw. die aliphatischen Carbonsäuresalze umfasst, auf der Oberfläche des Mineralfüllstoffes bzw. der Mineralfüllstoffe gebildet wird, was ein behandeltes Mineralfüllstoffprodukt zur Folge hat,
**dadurch gekennzeichnet, dass**
- das Gewichtsverhältnis aller aliphatischen Carbonsäuresalze, die in Schritt (c) bereitgestellt werden : allen aliphatischen Carbonsäuren, die in Schritt (b) bereitgestellt werden, von 51:49 bis 75:25 beträgt;
- das Gesamtgewicht aller aliphatischen Carbonsäuresalze und aller aliphatischen Carbonsäuren, die auf der Oberfläche des Mineralfüllstoffes angeordnet sind, wenigstens 2,5 mg/m² des Mineralfüllstoffes, der in Schritt (a) bereitgestellt wird, beträgt;
- während Schritt (d) die Temperatur so eingestellt wird, dass alle aliphatischen Carbonsäuren und alle aliphatischen Carbonsäuresalze geschmolzen werden.

2. Verfahren nach Anspruch 1, **dadurch gekennzeichnet, dass** das Gewichtsverhältnis aller aliphatischen Carbonsäuresalze : allen aliphatischen Carbonsäuren von 55:45 bis 75:25 beträgt, bevorzugter von 60:40 bis 70:30 beträgt, z.B. von 64:36 bis 67:33.

3. Verfahren nach Anspruch 1 oder 2, **dadurch gekennzeichnet, dass** der Mineralfüllstoff bzw. die Mineralfüllstoffe in (a) Calciumcarbonat umfassende Mineralfüllstoffe und/oder plattenartige Mineralstoff umfassende Mineralfüllstoffe und/oder Quarz umfassende Mineralfüllstoffe und/oder Tonerden umfassende Mineralfüllstoffe sind, und bevorzugt Calciumcarbonat umfassende Mineralfüllstoffe.

4. Verfahren nach Anspruch 3, **dadurch gekennzeichnet, dass** die Calciumcarbonat umfassenden Mineralfüllstoffe gefälltes Calciumcarbonat (PCC), nämlich eines oder mehrere aus den aragonitsichen, vateritischen oder calcinitischen mineralogischen Kristallformen, und/oder natürliches, gemahlenes Calciumcarbonat (NGCC), nämlich eines oder mehrere aus Marmor, Kalkstein oder Kreide, und/oder Dolomit sind.

5. Verfahren nach Anspruch 4, **dadurch gekennzeichnet, dass** die Calciumcarbonat umfassenden Mineralfüllstoffe Marmor und/oder Dolomit sind.

6. Verfahren nach Anspruch 3, **dadurch gekennzeichnet, dass** der plattenartige Mineralsfüllstoff Talk ist.

7. Verfahren nach einem der Ansprüche 1 bis 6, **dadurch gekennzeichnet, dass** das bzw. die di- und/oder trivalente(n) Kationensalz(e) einer aliphatischen oder mehrerer aliphatischer C₈- bis C₂₄-Carbonsäure(n) ausgewählt ist bzw. sind aus Calcium-, Magnesium-, Strontium- und Aluminiumsalzen, und Gemischen davon, und bevorzugt ausgewählt ist bzw. sind aus Calciumsalzen, Magnesiumsalzen und Gemischen davon.

8. Verfahren nach einem der Ansprüche 1 bis 7, **dadurch gekennzeichnet, dass** das bzw. die di- und/oder trivalente(n) Kationensalz(e) einer aliphatischen oder mehrerer aliphatischer C₈- bis C₂₄-Carbonsäure(n) di- und/oder trivalente Kationensalze einer aliphatischen oder mehrerer aliphatischer C₁₀- bis C₁₈-Carbonsäure(n) sind, und bevorzugt di- und/oder trivalente Kationensalze einer aliphatischen oder mehrerer aliphatischer C₁₂- bis C₁₈-Carbonsäure(n) sind.

9. Verfahren nach einem der Ansprüche 1 bis 8, **dadurch gekennzeichnet, dass** das bzw. die di- und/oder trivalente(n) Kationensalz(e) einer aliphatischen oder mehrerer aliphatischer C₈- bis C₂₄-Carbonsäure(n) ein Salz bzw. Salze von di- und/oder trivalente(n) Kationensalz(en) einer aliphatischen oder mehrerer aliphatischer Monocarbonsäure(n) ist bzw. sind.

10. Verfahren nach einem der Ansprüche 1 bis 9, **dadurch gekennzeichnet, dass** das bzw. die di- und/oder trivalente(n) Kationensalz(e) einer aliphatischen oder mehrerer aliphatischer C₈- bis C₂₄-Carbonsäure(n) ein Salz bzw. Salze von einer oder mehreren Fettsäuren ist bzw. sind, insbesondere Stearinsäure und/oder Palmitinsäure und/oder Myristinsäure und/oder Laurinsäure, und am meisten bevorzugt Salze von Stearinsäure und/oder Palmitinsäure sind.

11. Verfahren nach einem der Ansprüche 1 bis 10, **dadurch gekennzeichnet, dass** das bzw. die di- und/oder trivalente(n) Kationensalz(e) einer aliphatischen oder mehrerer aliphatischer C₈- bis C₂₄-Carbonsäure(n) eine entsprechende isolierte Viskosität von mehr als 100.000 mPa·s aufweisen, und bevorzugt von mehr als 1.000.000 mPa·s, bei 180°C, wenn in einem PHYSICA MCR 300, ausgerüstet mit einer CP50-1 Messgeräteausrüstung, gemessen bei einer Schergeschwindigkeit von 5 s⁻¹ und Scanntemperaturen von 200 bis 130°C.

12. Verfahren nach einem der Ansprüche 1 bis 11, **dadurch gekennzeichnet, dass** die aliphatische(n) C₈- bis C₂₄-Carbonsäure(n) eine aliphatische bzw. aliphatische C₁₀- bis C₁₈-Carbonsäure(n) ist bzw. sind, und bevorzugt eine aliphatische bzw. aliphatische C₁₂- bis C₁₈-Carbonsäure ist bzw. sind.

13. Verfahren nach einem der Ansprüche 1 bis 12, **dadurch gekennzeichnet, dass** die aliphatische(n) C₈- bis C₂₄-Carbonsäure(n) eine aliphatische bzw. aliphatische Fettsäure(n) ist bzw. sind, insbesondere Stearinsäure und/oder Palmitinsäure und/oder Myristinsäure und/oder Laurinsäure oder deren Gemische, und am meisten bevorzugt Stearinsäure und/oder Palmitinsäure sind.

14. Verfahren nach einem der Ansprüche 1 bis 13, **dadurch gekennzeichnet, dass** die Gesamtmenge an aliphatischen Carbonsäuren und an aliphatischen Carbonsäuresalzen sich auf grösser als 2,7 beläuft, bevorzugter auf wenigstens 3, insbesondere auf wenigstens 3,2, z.B. eine Gesamtmenge an aliphatischen Carbonsäuren und an aliphatischen Carbonsäuresalzen von 3,5 mg pro m² Mineralfüllstoff(e).

15. Verfahren nach einem der Ansprüche 1 bis 14, **dadurch gekennzeichnet, dass** das entsprechende isolierte Gemisch des aliphatischen Carbonsäuresalzes bzw. der aliphatischen Carbonsäuresalze und der aliphatischen Carbonsäure(n) eine Viskosität von weniger als 10.000, bevorzugt von weniger als 1.000, und bevorzugter von weniger als 500 mPa·s bei 180°C aufweist.

16. Verfahren nach einem der Ansprüche 1 bis 15, **dadurch gekennzeichnet, dass** die aliphatische Carbonsäure ein 1:1-Gemisch von Stearinsäure und Palmitinsäure ist, und dass das bzw. die aliphatische(n) Carbonsäuresalz(e) ein Magnesium- oder Calcium stearat ist bzw. sind.

17. Verfahren nach einem der Ansprüche 1 bis 16, **dadurch gekennzeichnet, dass** die aliphatische(n) Carbonsäure(n), die in Schritt (b) bereitgestellt wird bzw. werden, in einem geschmolzenen Zustand ist bzw. sind.

18. Verfahren nach einem der Ansprüche 1 bis 17, **dadurch gekennzeichnet, dass** das bzw. die aliphatische(n) Carbonsäuresalz(e), das in Schritt (c) bereitgestellt wird bzw. die in Schritt (c) bereitgestellt werden, in einem geschmolzenen Zustand ist bzw. sind.

19. Verfahren nach einem der Ansprüche 1 bis 18, **dadurch gekennzeichnet, dass** in Schritt (d) alle oder ein Teil des aliphatischen Carbonsäuresalzes aus Schritt (c) bzw. ein Teil der aliphatischen Carbonsäuresalze aus Schritt (c), und alle oder ein Teil der aliphatischen Carbonsäure(n) aus Schritt (b), und bevorzugt alle aliphatischen Carbonsäuresalze aus Schritt (c) und alle aliphatischen Carbonsäuren aus Schritt (b), zuerst miteinander in Kontakt gebracht und gemischt werden unter Bildung eines geschmolzenen Gemisches, vor dem Inkontaktbringen mit jeglichem Mineralfüllstoff bzw. jeglichen Mineralfüllstoffen.

20. Verwendung eines Produkts, erhalten durch ein Verfahren gemäss einem der Ansprüche 1 bis 19 in einem Mischverfahren und/oder Extrudierverfahren und/oder Kompoundierungsverfahren und/oder Blasgiessverfahren mit Kunststoffmaterialien.

21. Verwendung nach Anspruch 20, **dadurch gekennzeichnet, dass** die Kunststoffmaterialien Polyolefine oder Thermoplaste umfassen, wie Polyethylene (PE), Polypropylene (PP) und/oder Polyurethane (PU).

22. Filme, umfassend die Produkte, die durch ein Verfahren gemäss einem der Ansprüche 1 bis 19 erhalten wurden.

23. Filme nach Anspruch 22, **dadurch gekennzeichnet, dass** sie aus der Gruppe ausgewählt sind, die gereckte und/oder orientierte Filme, und bevorzugt atmungsaktive Filme oder Extrusionsbeschichtungsfilme umfasst.

## Revendications

1. Procédé de préparation d'un produit charge minérale traitée **caractérisé en ce que** le dit procédé comprend les étapes suivantes :
(a) fournir au moins une charge minérale sèche ;
(b) fournir au moins un acide carboxylique aliphatique saturé en C₈ à C₂₄ ;
(c) fournir au moins un sel cation di et/ou trivalent d'un ou plusieurs acides carboxyliques aliphatiques saturés en C₈ à C₂₄ ;
(d) mettre en contact la ou les dites charges minérales de l'étape (a), en une ou plusieurs étapes avec chauffage, avec :
a. « le ou les acides carboxyliques aliphatiques » de l'étape (b) ;
b. « le ou les sels d'acide carboxylique aliphatique » de l'étape (c) ; après quoi
(e) une couche de traitement comprenant le ou les dits acides carboxyliques aliphatiques et le ou les dits sels d'acide carboxylique aliphatique est formée à la surface de la ou les dites charges minérales résultant dans un produit charge minérale traitée ;
**caractérisé en ce que**
- le rapport en poids de la totalité du ou des dits sels d'acide carboxylique aliphatique fournis à l'étape (c) : la totalité du ou des dits acides carboxyliques aliphatiques fournis à l'étape (b) est compris entre 51 :49 et 75 :25 ;
- le poids total de la totalité du ou des dits sels d'acide carboxylique aliphatique et de la totalité du ou des dits acides carboxyliques aliphatiques situés sur la surface de la charge minérale est au moins 2.5 mg/m² de la charge minérale fournie à l'étape (a);
- durant l'étape (d), la température est réglée de telle sorte que la totalité du ou des acides carboxyliques aliphatiques et du ou des sels d'acide carboxylique aliphatique est fondue.

2. Procédé selon la revendication 1 **caractérisé en ce que** le dit rapport en poids de la totalité du ou des dits sels d'acide carboxylique aliphatique : la totalité du ou des dits acides carboxyliques aliphatiques est compris entre 55 :45 et 75 :25, plus préférentiellement entre environ 60 :40 et 70 :30, par exemple entre 64 :36 et 67 :33.

3. Procédé selon la revendication 1 ou 2 **caractérisé en ce que** la ou les charges minérales dans l'étape (a) sont des charges minérales comprenant du carbonate de calcium et/ou des charges minérales comprenant des minéraux en forme de plaque et/ou des charges minérales comprenant du quartz et/ou des charges minérales comprenant de l'argile, et sont préférentiellement des charges minérales comprenant du carbonate de calcium.

4. Procédé selon la revendication 3 **caractérisé en ce que** les charges minérales comprenant du carbonate de calcium sont du carbonate de calcium précipité (PCC), nommément une ou plusieurs des formes cristallines minérales aragonite, vatérite et calcite, et/ou du carbonate de calcium naturel broyé (NGCC), nommément un ou plusieurs du marbre, du calcaire, ou de la craie, et/ou de la dolomie.

5. Procédé selon la revendication 4 **caractérisé en ce que** les charges minérales comprenant du carbonate de calcium sont du marbre et/ou de la dolomie.

6. Procédé selon la revendication 3 **caractérisé en ce que** la charge minérale en forme de plaque est du talc.

7. Procédé selon l'une quelconque des revendications 1 à 6 **caractérisé en ce que** le ou les sels cation di et/ou trivalent d'un ou plusieurs acides carboxyliques aliphatiques en C₈ à C₂₄ sont choisis parmi les sels de calcium, magnésium, strontium et aluminium, et leurs mélanges, et sont préférentiellement choisis parmi les sels de calcium, les sels de magnésium et leurs mélanges.

8. Procédé selon l'une quelconque des revendications 1 à 7 **caractérisé en ce que** le ou les sels cation di et/ou trivalent d'un ou plusieurs acides carboxyliques aliphatiques en C₈ à C₂₄ sont un sel cation di et/ou trivalent d'un ou plusieurs acides carboxyliques aliphatiques en C₁₀ à C₁₈, et sont préférentiellement un sel cation di et/ou trivalent d'un ou plusieurs acides carboxyliques aliphatiques en C₁₂ à C₁₈.

9. Procédé selon l'une quelconque des revendications 1 à 8 **caractérisé en ce que** le ou les sels cation di et/ou trivalent d'un ou plusieurs acides carboxyliques aliphatiques en C₈ à C₂₄ sont un ou des sels d'un sel cation di et/ou trivalent d'un ou plusieurs acides monocarboxyliques aliphatiques.

10. Procédé selon l'une quelconque des revendications 1 à 9 **caractérisé en ce que** le ou les sels cation di et/ou trivalent d'un ou plusieurs acides carboxyliques aliphatiques en C₈ à C₂₄ sont un ou des sels d'un ou plusieurs acides gras, préférentiellement d'un ou des acides stéariques et/ou palmitiques et/ou myristiques et/ou lauriques, et très préférentiellement sont des sels d'un ou des acides stéariques et/ou palmitiques.

11. Procédé selon l'une quelconque des revendications 1 à 10 **caractérisé en ce que** le ou les sels cation di et/ou trivalent d'un acide carboxylique aliphatique en C₈ à C₂₄ présentent une viscosité isolée équivalente supérieure à 100 000 mPa.s, et préférentiellement supérieure à 1 000 000 mPa.s à 180°C mesurée à l'aide d'un PHYSICA MCR 300 équipé d'un instrument CP50-1 à un taux de cisaillement de 5 s⁻¹ et des températures de balayage comprises entre 200 et 130°C.

12. Procédé selon l'une quelconque des revendications 1 à 11 **caractérisé en ce que** le ou les acides carboxyliques aliphatiques en C₈ à C₂₄ sont un ou des acides carboxyliques aliphatiques en C₁₀ à C₁₈, et sont préférentiellement un ou des acides carboxyliques aliphatiques en C₁₂ à C₁₈.

13. Procédé selon l'une quelconque des revendications 1 à 12 **caractérisé en ce que** le ou les acides carboxyliques aliphatiques en C₈ à C₂₄ sont un ou des acides gras, préférentiellement des acides stéariques et/ou palmitiques et/ou myristiques et/ou lauriques ou leurs mélanges, et très préférentiellement sont l'acide stéarique et/ou palmitique.

14. Procédé selon l'une quelconque des revendications 1 à 13 **caractérisé en ce que** le total du ou des acides carboxyliques aliphatiques et du ou des sels d'acide carboxylique aliphatique est supérieur à 2.7, plus préférentiellement est d'au moins 3, en particulier d'au moins 3.2, par exemple est 3.5 mg du total du ou des acides carboxyliques aliphatiques et du ou des sels d'acide carboxylique aliphatique /m² de la ou des charges minérales.

15. Procédé selon l'une quelconque des revendications 1 à 14 **caractérisé en ce que** le mélange isolé correspondant du ou des sels d'acide carboxylique aliphatique et du ou des acides carboxyliques aliphatiques présente une viscosité inférieure à 10 000, préférentiellement inférieure à 1000 et plus préférentiellement inférieure à 500 mPa.s à 180°C.

16. Procédé selon l'une quelconque des revendications 1 à 15 **caractérisé en ce que** l'acide carboxylique aliphatique est un mélange 1 :1 acide stéarique :acide palmitique, et le ou les sels d'acide carboxylique aliphatique est un stéarate de magnésium ou de calcium.

17. Procédé selon l'une quelconque des revendications 1 à 16 **caractérisé en ce que** le ou les acides carboxyliques aliphatiques fournis à l'étape (b) sont à l'état fondu.

18. Procédé selon l'une quelconque des revendications 1 à 17 **caractérisé en ce que** le ou les sels d'acide carboxylique aliphatique fournis à l'étape (c) sont à l'état fondu.

19. Procédé selon l'une quelconque des revendications 1 à 18 **caractérisé en ce que** dans l'étape (d), tout ou partie du ou des dits sels d'acide carboxylique aliphatique de l'étape (c) et tout ou partie du ou des dits acides carboxyliques aliphatiques de l'étape (b), et préférentiellement la totalité du ou des dits sels d'acide carboxylique aliphatique de l'étape (c) et la totalité du ou des dits acides carboxyliques aliphatiques de l'étape (b) sont d'abord mis en contact l'un avec l'autre puis mélangés pour former un mélange fondu avant tout contact avec la ou les dites charges minérales.

20. Utilisation du produit obtenu par un procédé selon l'une quelconque des revendications 1 à 19 dans un procédé de mélange et/ou d'extrusion et/ou de fabrication de «mélange-maîtres » (compounding) et/ou de moulage par soufflage avec des matières plastiques.

21. Utilisation selon la revendication 20 **caractérisée en ce que** les matières plastiques comprennent des polyoléfines ou des thermoplastiques telles que polyethylènes (PE), polypropylenes (PP) et/ou polyuréthannes (PU).

22. Films comprenant les produits obtenus par un procédé selon l'une quelconque des revendications 1 à 19.

23. Films selon la revendication 22 **caractérisés en ce qu'**ils sont sélectionnés dans le groupe comprenant les films étirés et/ou orientés, et préférentiellement les films respirables, ou les films extrusion de revêtement.
